# EUROPÄISCHE PATENTANMELDUNG

(11) **EP 4 733 646 A2**
(43) Veröffentlichungstag der Anmeldung: **29.04.2026**
(21) Anmeldenummer: 25210091.2
(22) Anmeldetag: 21.10.2025
(51) Int. Cl.: F16L 5/12, F16K 7/07, F16K 7/12, F16K 7/17, F16L 25/01, F16L 37/30

(54) **KUPPLUNGSANORDNUNG FÜR EINE FLUIDVERBINDUNG IN EINEM FAHRZEUG SOWIE FAHRZEUG MIT EINER SOLCHEN KUPPLUNGSANORDNUNG**

(30) Priorität: 22.10.2024 DE 102024210207
(71) Anmelder: LEONI Bordnetz-Systeme GmbH, 97318 Kitzingen (DE); LEONI Wiring Systems Slovakia spol. s r.o., 911 01 Trencin (SK)
(72) Erfinder: FALASTA, Stefan, 911 01 Trencin (SK); HOLZMANN, Frédéric, 97084 Würzburg (DE)
(74) Vertreter: FDST Patentanwälte

(57) **Zusammenfassung**

Die Kupplungsanordnung (2, 36) für eine Fluidverbindung in einem Fahrzeug weist zwei Fluid-Kupplungsteile (4A, 4B) mit jeweils einem Fluidkanal (14) für ein Fluid auf, wobei in jedem Fluidkanal (14) eine geschlitzte Membran (18) angebracht ist und eine jeweilige Membran (18) den jeweiligen Fluidkanal (14) im gekuppelten Zustand endseitig verschließt und einen Durchfluss des Fluids erst bei Überschreiten eines vorgegebenen Fluiddrucks ermöglicht. Hierdurch ist bei einem Trennen der Kupplungsanordnung ein Tropfschutz erzielt.

## Beschreibung

Die Erfindung betrifft eine Kupplungsanordnung für eine Fluidverbindung in einem Fahrzeug mit zwei Fluid-Kupplungsteilen mit jeweils einem Fluidkanal für ein Fluid, wobei in jedem Fluidkanal eine geschlitzte Membran angebracht ist. Die Erfindung betrifft weiterhin ein Fahrzeug mit einer solchen Kupplungsanordnung.

Neben elektrischen Verbindungsleitungen werden in Kraftfahrzeugen auch eine Vielzahl von Fluidleitungen beispielsweise für Reinigungsflüssigkeiten / Wischwasser verbaut. Aufgrund des zunehmenden Einsatzes von Sensoren, die sicherheitsrelevant sind, wird zunehmend auch eine Reinigungseinrichtung für derartige Sensoren gefordert, sodass also der Bedarf beispielsweise an Fluidleitungen zur Bereitstellung einer Reinigungsflüssigkeit zunimmt. Im Hinblick auf eine einfache Montage oder auch Reparatur ist es von Vorteil, wenn derartige Fluidleitungen über geeignete Kupplungsanordnungen, beispielsweise in einer Trennebenen zwischen einem Nassbereich und einem Trockenbereich, reversibel trennbar sind. Hierbei besteht das Problem, dass bei einer gefüllten Fluidleitung bei einem Trennen das Fluid aus der Fluidleitung an der geöffneten Trennstelle in die Umgebung austreten kann. Speziell wenn die Kupplungsstelle in einem Innenraum des Fahrzeugs angeordnet ist, kann dies zu einer Beschädigung oder zumindest zu einem unerwünschten Nässeeintritt führen.

Um einen solchen Flüssigkeitsaustritt zu vermeiden können die Kupplungsteile beispielsweise mit einem Ventil versehen sein, welches jedoch teilweise aufwendig und damit kostenintensiv ist.

Aus dem medizinischen Bereich ist gemäß der EP 3 079 756 B1 eine Kupplungsanordnung mit zwei Kupplungsteilen zu entnehmen, bei der zur Verhinderung eines Flüssigkeitsaustritts und eines Rückflusses jedes der beiden Kupplungsteile eine geschlitzte Membran aufweist, welche in Fließrichtung zur Kupplungsstelle sperrend ausgebildet ist. Um bei geschlossener Kupplung einen Durchfluss zu ermöglichen, weist das eine Kupplungsteil einen den Fluidkanal verlängernden Hohlstutzen auf, welcher bei geschlossener Kupplung die Membran des anderen Kupplungsteils durchstößt.

Bei einem Trennen der Kupplung besteht hierbei jedoch das Problem, dass zumindest die sich im Hohlstutzen befindliche Flüssigkeit auslaufen kann.

Ausgehend hiervon liegt der Erfindung die Aufgabe zugrunde, eine trennbare Kupplungsanordnung für eine Fluidverbindung in einem Fahrzeug anzugeben, bei der bei einem Trennen der Kupplung ein Auslaufen des Fluids verhindert und ein Tropfschutz erreicht ist.

Die Aufgabe wird gemäß der Erfindung gelöst durch eine Kupplungsanordnung für eine Fluidverbindung in einem Fahrzeug, insbesondere Kraftfahrzeug mit zwei Fluid-Kupplungsteilen mit jeweils einem Fluidkanal für ein Fluid, wobei in jedem Fluidkanal eine mit zumindest einem Schlitz versehene, geschlitzte Membran angebracht ist und eine jeweilige Membran den jeweiligen Fluidkanal endseitig verschließt. Ein Durchfluss des Fluids ist erst bei Überschreiten eines vorgegebenen Fluiddrucks ermöglicht.

Die jeweils geschlitzte Membran weist einen dauerhaften Schlitz auf, der zwei Teilabschnitte der Membran voneinander trennt. Im Bereich des Schlitzes ist das Material der Membran dauerhaft nach Art eines Schnittes durchtrennt. Es ist zumindest ein vorzugsweise geradlinig verlaufender Schlitz ausgebildet. Bevorzugt sind mehrere, beispielsweise zwei sich kreuzende Schlitze ausgebildet.

Die Membran besteht allgemein aus einem elastischen Material. Die durch den Schlitz definierte Öffnung ist aufgrund der Elastizität verschlossen, solange ein anliegender Druck nicht den vorgegebenen Fluiddruck übersteigt, welcher nachfolgend auch als Öffnungsdruck bezeichnet wird. Im drucklosen Fall, wenn also kein Fluiddruck oder lediglich ein Fluiddruck unterhalb des Öffnungsdrucks anliegt, ist daher der Schlitz und damit ein Strömungsweg und damit der jeweilige Fluidkanal zuverlässig verschlossen. Erreicht oder übersteigt der Druck den Öffnungsdruck, so wird aufgrund des Schlitzes ein Strömungsweg durch die Membran hindurch freigegeben. Speziell weitet sich der Schlitz.

Hervorzuheben ist, dass die geschlitzte Membran den Strömungsweg aufgrund ihrer Ausgestaltung mit dem Schlitz auch wieder automatisch verschließt. Durch die geschlitzte Membran ist daher allgemein ein reversibles Verschlusselement für den jeweiligen Fluidkanal ausgebildet, welches automatisch den Strömungsweg in Abhängigkeit des anliegenden Fluiddrucks freigibt und wieder verschließt.

Von besonderer Bedeutung ist hierbei, dass die Membran den Fluidkanal des jeweiligen Kupplungsteils insbesondere im montierten, gekuppelten Zustand endseitig verschließt. Hierunter wird verstanden, dass nachfolgend zu der Membran der Fluidkanal des jeweiligen Kupplungsteils nicht weitergeführt wird. Insbesondere begrenzen die Membranen den jeweiligen Fluidkanal bereits auch im nicht gekuppelten Zustand. Im gekuppelten Zustand liegt zwischen den beiden Membranen daher allenfalls noch ein geringfügiger Abstand vor, welcher bevorzugt kleiner als 5 mm und insbesondere kleiner als 3 mm ist

Durch eine derartige Ausgestaltung ist gewährleistet, dass beim Trennen der beiden Fluid-Kupplungsteile zum einen Fluid nicht auslaufen kann und dass insbesondere auch keine Restflüssigkeit auslaufen kann, die in einem Kupplungsstutzen (Holstutzen) enthalten ist. Durch diese Maßnahme ist daher ein zuverlässiger Tropfschutz auch beim Lösen der Fluidkupplung gewährleistet.

Der Durchfluss des Fluids durch die jeweilige Membran wird durch einen ausreichenden Fluiddruck erreicht. Das Versperren eines Fluidweges mittels einer Membran ist grundsätzlich an sich bekannt und die Einstellung eines vorgegebenen definierten Öffnungsdrucks, bei dem die Membran den Durchfluss erlaubt, ist grundsätzlich konstruktiv durch geeignete Maßnahmen beim Ausbilden der Membran in bekannter Weise möglich. Vorliegend liegt der Öffnungsdruck beispielsweise im Bereich zwischen 0,2 bar und 2 bar.

Insbesondere ist in bevorzugter Ausgestaltung vorgesehen, dass die beiden Membranen im gekuppelten Zustand einander gegenüberliegend angeordnet sind, ohne dass eine der Membranen von einem Stutzen als Teil des Fluidkanals durchstoßen wird, wie dies beispielsweise gemäß dem Stand der Technik erforderlich ist.

In bevorzugter Ausgestaltung liegen die beiden Membranen im gekuppelten Zustand zumindest in Teilbereichen unmittelbar aneinander an. Hierdurch wird erreicht, dass ein eventuell zwischen den beiden Membranen verbleibender Zwischenraum möglichst gering ist, sodass also die Menge eines eventuell zwischen den Membranen befindlichen Restfluids möglichst gering ist.

In bevorzugter Ausgestaltung weisen die beiden Membranen jeweils einen umlaufenden Randbereich sowie einen geschlitzten Mittenbereich auf. Lediglich in diesem Mittenbereich ist daher zumindest ein Schlitz ausgebildet, durch den das Fluid hindurchfließen kann, wenn ein ausreichend hoher Fluiddruck anliegt. Die Mittenbereiche sind bevorzugt axial zueinander beabstandet.

Der Randbereich ist insbesondere ungeschlitzt. Der Mittenbereich weist zumindest einen Schlitz auf. Bevorzugt weist der Mittenbereich zumindest zwei oder genau zwei Schlitze auf, die kreuzförmig angeordnet sind. Grundsätzlich können auch mehr Schlitze vorgesehen sein. Bevorzugt weist der Randbereich eine größere Materialdicke als der geschlitzte Mittenbereich auf. Die Membran ist weiterhin allgemein aus einem elastischen Material ausgebildet, insbesondere aus einem elastomeren Material oder einem thermoplastischen Material. Speziell besteht die Membran beispielsweise aus Silikon.

Bei der Ausführungsvariante, bei der die beiden Membranen im gekuppelten Zustand unmittelbar aneinander anliegen, betrifft dies insbesondere diesen Randbereich. Dies bedeutet, dass die beiden Randbereiche gegeneinander gepresst sind. Die geschlitzten Mittenbereiche sind demgegenüber vorzugsweise voneinander beabstandet.

Durch das Gegeneinanderpressen der beiden Randbereiche wird eine zuverlässige Abdichtung nach außen erreicht, sodass auch bei geöffneten Membranen und beim Durchströmen des Fluids eine Abdichtung nach außen erreicht ist, sodass also die Kupplung dicht ist. Die Membran weist daher in diesem Fall eine Doppelfunktion auf, nämlich zum einen das Verschließen des Fluidkanals bei geöffneter Kupplung und gleichzeitig auch das Abdichten im gekuppelten Zustand nach außen.

Die beiden geschlitzten Mittenbereiche sind im gekuppelten Zustand in Axialrichtung vorzugsweise allgemein zueinander beabstandet. Hierdurch wird zuverlässig gewährleistet, dass die Membranen bei Anlegen des definierten Öffnungsdrucks, also bei Anlegen eines ausreichend hohen Fluiddrucks zuverlässig öffnen und sich beispielsweise nicht wechselseitig ersparen. Beim Öffnen werden Teilabschnitte der Membran, die durch den zumindest einen Schlitz voneinander getrennt sind, in Axialrichtung durch den Fluiddruck weg gedrückt, sodass sich also der Schlitz vergrößert und eine Öffnung für das Fluid ausbildet.

Der Abstand der beiden Mittenbereiche im gekuppelten Zustand liegt bevorzugt maximal bei 5mm, insbesondere maximal bei 3mm.

Insbesondere ist vorgesehen, dass zwischen den beiden Membranen kein zusätzliches Bauteil angebracht ist. Insbesondere ist zwischen den Teilbereichen der beiden Membranen, in denen die Schlitze angebracht sind, kein zusätzliches Bauteil angebracht.

Die Membranen weisen häufig eine Wölbung auf, insbesondere im Mittenbereich, wo der zumindest einen Schlitz angeordnet ist. Gemäß einer ersten Ausführungsvariante sind die beiden Membranen gegensinnig und zwar jeweils konkav gewölbt, sodass also die beiden Membranen zu gegensätzlichen Richtungen ausgewölbt sind. Bei einer derartigen Ausgestaltung ist also ein Zwischenraum zwischen den beiden Membranen im gekuppelten Zustand ausgebildet.

Um einen Zwischenraum zwischen den Membranen zu minimieren sind die beiden Membranen vorzugsweise gleichsinnig gewölbt. Dies bedeutet, dass die Membran des einen Fluid-Kupplungsteils konvex nach außen gewölbt und die des anderen Fluid-Kupplungsteils konkav nach innen gewölbt ist. Die beiden gewölbten Bereiche (Mittenbereich) greifen daher quasi ineinander. Ein verbleibender Zwischenraum zwischen den beiden Membranen im gekuppelten Zustand ist daher auf diese Weise möglichst gering gehalten. Hierdurch wird insgesamt die Menge an Restfluid zwischen den beiden Membranen minimiert.

Alternativ zu einer gewölbten Ausgestaltung sind die Membranen, insbesondere der geschlitzte Mittenbereich, plan ausgebildet und erstrecken sich insbesondere senkrecht zu einer Axialrichtung, entlang der allgemein das Fluid fließt.

In bevorzugter Ausgestaltung weisen die Fluid-Kupplungsteile jeweils ein Gehäuseteil auf, welches insbesondere eigensteif ausgebildet ist und aus einem geeigneten Material, insbesondere Kunststoff besteht. Das Gehäuseteil weist hierbei einen insbesondere topfförmigen Aufnahmeabschnitt auf, in dem jeweils die Membran einliegt. Der Aufnahmeabschnitt begrenzt daher einen Aufnahmeraum, in dem die Membran einliegt. Insbesondere ist das Material des Gehäuseteils härter als das der Membran.

An den Aufnahmeabschnitt, und zwar insbesondere an einen zentralen Bereich des Aufnahmeabschnitts schließt sich der Fluidkanal des jeweiligen Fluid-Kupplungsteils an. Dieser weist daher eine endseitige Öffnung auf, die in einem Bodenbereich des Aufnahmeabschnitts ausgebildet ist und damit in einen Aufnahmeraum mündet. Die Membran liegt in diesem Aufnahmeabschnitt die Öffnung abdichtend ein.

Speziell liegt die Membran mit ihrem umlaufenden Randbereich auf dem Bodenbereich des Aufnahmeabschnitts auf und der geschlitzte Mittenbereich verschließt die Öffnung zum Fluidkanal.

Der Fluidkanal, zumindest bei einem Fluid-Kupplungsteil und insbesondere auch bei beiden Fluid Kupplungsteilen, ist insbesondere als einstückiges, monolithisches Teil des Gehäuses ausgebildet. Insbesondere ist der Fluidkanal nach Art eines Anschlussstutzens ausgebildet. Das Gehäuse ist speziell ein Gussteil oder Spritzgussteil.

In bevorzugter Ausgestaltung weist zumindest eines der Gehäuseteile einen Schlauchstutzen auf, an den ein Fluidschlauch anschließbar ist. Dieser Schlauchstutzen ist insbesondere durch den zuvor erwähnten Anschlussstutzen ausgebildet. Bevorzugt weist dieser endseitig eine insbesondere konische Verdickung auf, über die ein elastischer Schlauch übergestülpt wird und insbesondere etwas aufgeweitet wird, sodass eine Abdichtung zwischen Innenwandung des Fluidschlauchs und der Verdickung erzielt ist.

Gemäß einer bevorzugten Ausführungsvariante weist jedes Fluid-Kupplungsteil einen Membranhalter auf, welcher in das jeweilige Gehäuseteil eingesetzt ist und welcher die jeweilige Membran im Gehäuseteil hält. Insbesondere liegt die jeweilige Membran zwischen einem Bodenbereich des Aufnahmeabschnitts und dem Membranhalter ein. Speziell ist die Membran durch den Membranhalter formschlüssig gehalten.

In zweckdienlicher Weiterbildung sind die beiden Membranhalter als Dichtelemente ausgebildet und sind im gekuppelten Zustand gegeneinander gepresst. Hierdurch ist eine zusätzliche Abdichtung der Kupplungsstelle im gekuppelten Zustand erreicht, sodass ein Austreten von Flüssigkeit im gekuppelten Zustand und beim Durchfließen des Fluids durch die Kupplung verhindert ist. Die beiden Membranhalter bestehen daher aus einem geeigneten elastischen Dichtmaterial, beispielsweise aus einem elastomeren oder einem thermoplastischen Material und insbesondere aus Silikon. Das Material des Membranhalters ist beispielsweise identisch mit dem Material der Membran oder unterscheidet sich alternativ hierzu von dem Material der Membran.

In bevorzugter Ausgestaltung greifen die beiden Membranhalter im gekuppelten Zustand ineinander ein. Speziell weist der eine Membranhalter hierzu eine ringförmige Basis auf, an die sich ein Stutzen anschließt. Der zweite Membranhalter weist ebenfalls eine ringförmige Basis auf, allerdings mit einem sich daran in Axialrichtung anschließenden Aufnahmestutzen, in den der Stutzen des anderen Membranhalters eintauchen kann.

Über den Stutzen und den Aufnahmestutzen ist daher im gekuppelten Zustand ein Dichtkanal gebildet, in dem die beiden Membranen einliegen, wobei dieser Dichtkanal eine zuverlässige Abdichtung nach außen gewährleistet.

Bevorzugt liegt der ringförmige Basisabschnitt eines jeweiligen Membranhalters auf einem Randabschnitt der jeweiligen Membran auf, sodass dieser zwischen dem ringförmigen Basisabschnitt und dem Bodenbereich des Gehäuses einliegt.

Bevorzugt weist die jeweilige Membran einen Axialabschnitt auf, welcher insbesondere zylindrisch ausgebildet ist. Die gesamte Membran ist vorzugsweise topfförmig ausgebildet, wobei ein Mantelabschnitt durch den Axialabschnitt gebildet ist und ein Bodenabschnitt der Membran den geschlitzten Bereich aufweist. Insbesondere ist der Bodenabschnitt durch den zuvor beschriebenen geschlitzten Mittenbereich und dem diesen umgebenden Randbereich gebildet. An den Bodenabschnitt schließt sich der Axialabschnitt, also der insbesondere zylindrische Wandabschnitt an.

Der Axialabschnitt liegt im gekuppelten Zustand vorzugsweise dichtend an einem weiteren Bauteil an. Hierdurch ist eine gute radiale und / oder axiale Abdichtung erreicht, so dass insbesondere bei geöffneter Membran, wenn also ein Fluid die Kupplungsanordnung durchströmt, ein Austreten des Fluids zuverlässig vermieden. Die radiale Abdichtung erfolgt beispielsweise radial nach außen zu einem äußeren Bauteil und / oder radial nach innen zu einem inneren Bauteil. Zur Ausbildung eine axialen Abdichtung liegt der Bodenabschnitt dichtend an einem weiteren Bauteil an.

Für die radiale Abdichtung weist der Axialabschnitt zumindest einer Membran vorzugsweise zumindest eine radial abstehende, umlaufende Dichtlippe auf.

Für eine evtl. axiale Abdichtung weist der Bodenabschnitt zumindest einer Membran bevorzugt eine axial abstehende Dichtlippe auf.

Diese topfförmige Ausgestaltung der Membran wird insbesondere bei der Ausführungsvariante mit den Membranhaltern eingesetzt. Die beiden Membranen, also insbesondere ihre topfförmigen Teilbereiche, sind vorzugsweise aufeinander zugerichtet, sodass also die beiden geschlitzten Mittenbereiche im gekuppelten Zustand unmittelbar nebeneinander angeordnet sind, d. h. ein Zwischenraum zwischen ihnen ist möglichst gering gehalten. Die beiden Axialabschnitte sind bevorzugt in gegenläufigen Richtungen orientiert. Sie liegen vorzugsweise radial dichtend in zumindest einem der Membranhalter an.

In zweckdienlicher Ausgestaltung weist der Stutzen des einen Membranhalters ein Abstandselement auf, welches im gekuppelten Zustand die beiden Mittenbereiche voneinander beabstandet hält. Hierdurch wird ein Zwischenraum für ein zuverlässiges Öffnen des Mittenbereichs gewährleistet. Das Abstandselement ist insbesondere als ein umlaufender Ringsteg an der Innenseite des Stutzens ausgebildet.

Gemäß einer bevorzugten Ausgestaltung sind die beiden Membranen, und zwar insbesondere deren Axialabschnitte ineinandergesteckt. Die eine topfförmige Membran nimmt daher die andere topfförmige Membran auf. Die beiden Axialabschnitte erstrecken sich in die gleiche Richtung. Die beiden Membranen liegen in bevorzugter Ausgestaltung in radialer Richtung und / oder in axialer Richtung dichtend aneinander an. Bevorzugt weist zumindest eine der Membranen hierfür eine radial und / oder axial abstehende Dichtlippe auf.

Für eine radiale Abdichtung liegen die beiden Axialabschnitte dichtend aneinander an. Ergänzend oder alternativ liegen die beiden Bodenabschnitte , insbesondere die ungeschlitzten Randbereiche dichtend aneinander an, so dass hierdurch die beiden Membranen in Axialrichtung dichtend aneinander anliegen.

Die eine, äußere topfförmige Membran liegt vorzugsweise in einem Gehäusestutzen insbesondere passgenau ein und liegt hierzu bevorzugt mit seinem Bodenabschnitt auf einen ringförmigen Bodenbereich des Gehäusestutzens auf. An den ringförmigen Bodenbereich des Gehäusestutzens schließt sich beispielsweise ein Fluidstutzen, insbesondere ein Schlauchstutzen an, welcher den Fluidkanal bildet. Dieser ist von dem geschlitzten Mittenbereich der Membran - als Teil des Bodenabschnitts der Membran - verschlossen. Der Axialabschnitt liegt mit seiner Außenseite bevorzugt an einer insbesondere zylindrischen Wandung des Gehäusestutzens an.

Die andere, innere topfförmige Membran liegt mit ihrem Axialabschnitt an dem Axialabschnitt der äußeren Membran und mit ihrem Bodenabschnitt an dem Bodenabschnitt der äußeren Membran jeweils dichtend an. Bevorzug umgibt die innere Membran ein eigensteifes, festes Rohrstück als Teil des Fluidkanals. Die innere Membran ist daher dichtend über das Rohrstück übergestülpt und liegt mit ihrem Axialabschnitt dichten am Außenmantel des Rohrstücks an. Der Bodenabschnitt mit dem geschlitzten Mittenbereich verschließt dieses Rohrstück stirnseitig.

In zweckdienlicher Ausgestaltung ist die Kupplungsanordnung als eine hybride Kupplungsanordnung ausgebildet, welche neben den beiden Fluid-Kupplungsteilen ergänzend auch für eine reversibel lösbare elektrische Verbindung ausgebildet ist und hierzu zwei elektrische Kupplungsteile aufweist. Diese Ausgestaltung der hybriden Kupplung wird als ein eigenständig erfinderisches Lösungskonzept angesehen, auch unabhängig von der speziellen Ausgestaltung der beiden Fluid-Kupplungsteil, wie sie zuvor beschrieben wurden.

Der besondere Vorteil der hybriden Kupplungsanordnung ist darin zu sehen, dass mit nur einer Kupplungsanordnung sowohl eine elektrische als auch eine FluidKupplung ausgebildet ist. Hierdurch ist eine vereinfachte Montage erreicht. Speziell bei einer abgedichteten Durchführung durch Wandbereiche, beispielsweise zwischen einem Nassbereich und einem Trockenbereich, wird eine kompakte Ausgestaltung und/oder einfache Montage bei einer zuverlässigen Abdichtung erreicht.

In bevorzugter Ausgestaltung weist die hybride Kupplungsanordnung zumindest ein und vorzugsweise zwei kombinierte Kupplungsteile auf, die jeweils als eine Baueinheit ausgebildet sind. Ein jeweiliges kombiniertes Kupplungsteil weist sowohl eines der Fluid-Kupplungsteile als auch eines der elektrischen Kupplungsteile auf, die also Bestandteil der gemeinsamen Baueinheit sind. Hierdurch wird also erreicht, dass mit lediglich einer Baueinheit ein gemeinsames Verbinden sowohl der elektrischen Leitungen als auch der zumindest einen Fluid-Leitung ermöglicht ist.

Bei der Ausgestaltung mit zwei kombinierten Kupplungsteilen sind diese in bevorzugter Ausgestaltung entweder unmittelbar oder zumindest mittelbar reversibel miteinander kuppelbar, beispielsweise über eine Steckverbindung.

Das zumindest eine kombinierte Kupplungsteil und insbesondere beide kombinierten Kupplungsteile weist/weisen jeweils in bevorzugter Ausgestaltung ein Gehäuse mit Verbindungsteilen für eine lösbare Verbindung und Kupplung auf. Hierbei kann es sich wiederum um Rastelemente handeln, um Schraubelemente für eine Schraubkupplung, um geeignete Elemente für eine Bajonett-Kupplung oder auch um geeignete Elemente für eine Steckverbindung.

In einer bevorzugten Ausgestaltung bildet die Kupplungsanordnung oder auch die hybride Kupplungsanordnung eine freie Kupplung aus. Hierunter wird verstanden, dass über diese freie Kupplung lediglich die Abschnitte einer Fluidleitung oder ggf. ergänzend auch die elektrischen Leitungen miteinander verbunden werden, ohne dass die Kupplungsanordnungen Teilstücke einer weiteren Komponente oder eines sonstigen Bauteils sind. Im montierten Zustand im Fahrzeug ist eine derartige freie Kupplungsanordnung daher beispielsweise frei verlegt oder allenfalls über ein Befestigungselement an einem Träger fixiert.

In bevorzugter Ausgestaltung weist die Kupplungsanordnung und insbesondere auch die hybride Kupplungsanordnung einen Schnittstellen-Träger auf, welcher dazu ausgebildet ist, in einen Wanddurchbruch eingesetzt zu werden, um zwei Teilräume voneinander insbesondere dichtend abzutrennen. Bei den beiden Teilräumen handelt es sich beispielsweise um zwei Teilräume eines Fahrzeugs, insbesondere werden ein Nassbereich von einem Trockenbereich getrennt. An dem Schnittstellen-Träger sind im montierten Zustand zumindest die beiden Fluid-Kupplungsteile angebracht, die reversibel miteinander verbunden werden können.

Die beiden Fluid-Kupplungsteile sind daher an gegenüberliegenden Seiten des Schnittstellen-Trägers angebracht. Durch den Schnittstellen-Träger und den Fluid-Kupplungsteilen ist insgesamt eine Baueinheit geschaffen, die zum einen einen insbesondere abgedichteten Durchgang zwischen zwei Teilräumen zuverlässig gewährleistet und die zugleich auch direkt an der Schnittstelle zwischen beiden Teilräumen das reversible Trennen der Fluidleitung erlaubt.

Bevorzugt sind neben den Fluid-Kupplungsteilen ergänzend auch die elektrischen Kupplungsteile am Schnittstellen-Träger angebracht. Dadurch ist insgesamt eine hybride, kombinierte Schnittstelle zwischen den beiden Teilräumen bei einer zuverlässigen Abdichtung erreicht.

Der Schnittstellen-Träger weist in bevorzugter Ausgestaltung einen umlaufenden Rand auf, mit dem er dichtend an einem Wandbereich des Wanddurchbruchs anliegt. Hierdurch wird zuverlässig die abgedichtete Durchführung erreicht.

In einer bevorzugten Ausgestaltung ist der Schnittstellen-Träger plattenförmig ausgebildet und beispielsweise gebildet durch einen plattenartigen Metallträger oder auch Kunststoff-Träger. Dieser Träger weist zumindest einen Durchbruch auf, an dem die Fluid-Kupplungsteile und ggf. ergänzend die elektrischen Kupplungsteile angebracht sind. Insbesondere ist lediglich ein Durchbruch ausgebildet, an dem die kombinierte Baueinheit der zuvor beschriebenen hybriden Kupplungsanordnung angebracht ist.

Bei der Ausführungsvariante mit dem Schnittstellen-Träger bestehen für die Anordnung der Kupplungsteile unterschiedliche Möglichkeiten. So ist beispielsweise eines der beiden Kupplungsteile eines jeweiligen Kupplungsteilen-Paares jeweils fest am Schnittstellen-Träger angebracht und das andere Kupplungsteil ist reversibel lösbar an diesem Kupplungsteil oder dem Schnittstellen-Träger befestigt. Dies gilt insbesondere auch für die kombinierte Baueinheit bei der hybriden Kupplungsanordnung, bei der also ein Gehäuseteil der kombinierten Baueinheit fest mit dem Schnittstellen-Träger verbunden ist und das andere Gehäuseteil reversibel lösbar hieran angebracht ist.

Alternativ hierzu ist jedes der Kupplungsteile eines jeweiligen Kupplungsteilen-Paares oder auch die beiden kombinierten Kupplungsteile reversibel lösbar am Schnittstellen-Träger angebracht. Hierzu weist dieser beispielsweise geeignete Halterungen auf, die nachfolgend auch als Anschlussteile bezeichnet werden. An diesen können die Kupplungsteile bzw. die kombinierten Kupplungsteile reversibel lösbar angeschlossen werden.

Insbesondere für die durch die beiden elektrischen Kupplungsteile gebildeten elektrischen Schnittstelle weist der Schnittstellen-Träger einen elektrischen Kontaktträger auf, an dem vorzugsweise beidseitig elektrische Anschlusskontakte angebracht sind, die jeweils über das jeweilige elektrische Kupplungsteil, beispielsweise über eine Steckverbindung, kontaktierbar sind. Der elektrische Kontaktträger ist beispielsweise durch eine Leiterplatte insbesondere in Verbindung mit einem geeigneten Steckergehäuse gebildet, an dem die beiden elektrischen Kupplungsteile anschließbar sind.

Gemäß einer bevorzugten Ausgestaltung ist der Schnittstellen-Träger als eine Tülle ausgebildet. Der Schnittstellen-Träger ist daher aus einem Dichtmaterial ausgebildet und insbesondere als ein gespritztes oder gegossenes Bauteil. Über die Tülle wird allgemein die Abdichtung des Wanddurchbruchs erreicht. Bei dem Dichtmaterial handelt es sich insbesondere um ein elastomeres oder um ein thermoplastisches Material. Insbesondere zu Versteifungszwecken können in der Tülle Einlegeteile aus einem härteren Material eingebettet sein. Im montierten Zustand wird die Tülle gegen einen Rand des Wanddurchbruches gepresst. Eine an das Fluid-Kupplungsteil angeschlossenen Fluidleitung sowie ein an das elektrische Kupplungsteil angeschlossene elektrische Leitung sind im montierten Zustand mit Hilfe der Tülle abgedichtet (insbesondere längswasserdicht) durch den Wanddurchbruch hindurchgeführt.

In bevorzugter Ausgestaltung ist dabei zumindest eines der beiden Kupplungsteile eines jeweiligen Kupplungsteil-Paares in der Tülle eingebettet. Alternativ ist ein Trägerelement in der Tülle eingebettet, an welches beidseitig ein jeweiliges Kupplungsteil (Fluid-Kupplungsteil oder elektrisches Kupplungsteil) anschließbar ist. Im Falle der elektrischen Schnittstelle ist dieses Trägerelement insbesondere der zuvor bereits erwähnte elektrische Kontaktträger.

In zweckdienlicher Ausgestaltung schließt sich an den Schnittstellen-Träger ein Schutzschlauch an, in der ein mit dem einen Fluid-Kupplungsteil verbundener Fluidschlauch sowie vorzugsweise auch zumindest eine elektrische Leitung geführt ist / sind.

Bei diesem Schutzschlauch handelt es sich insbesondere um einen Verbindungsschlauch zwischen zwei relativ zueinander beweglichen Karosserieteilen eines Fahrzeuges. Über diesen Schutzschlauch erfolgt beispielsweise die Verbindung zu einer Tür, beispielsweise eine Seitentür oder auch zu einer Heckklappe, zu einer Schiebetür usw. Bei dem Schnittstellen-Träger handelt es sich hierbei insbesondere um die erwähnte Tülle. Diese bildet zusammen mit dem Schutzschlauch vorzugsweise ein einstückiges, monolithisches Bauteil. Zweckdienlicherweise ist am gegenüberliegenden Ende zu dem Schnittstellen-Träger eine weitere Tülle ausgeformt, also integraler Bestandteil des Schutzschlauches.

Die Kupplungsanordnung ist gemäß einer bevorzugten Ausgestaltung Bestandteil einer elektrischen Baueinheit, insbesondere einer Steuereinheit, welche ein Gehäuse aufweist, an dem zumindest eines der Fluid-Kupplungsteile reversibel lösbar angeschlossen werden kann. Bevorzugt sind beide Fluid-Kupplungsteile reversibel lösbar an dem Gehäuse anschließbar und im gekuppelten Zustand angeschlossen. Bevorzugt handelt es sich hierbei insbesondere wiederum um eine hybride Kupplungsanordnung, bei der neben den beiden Fluid-Kupplungsteilen auch elektrische Kupplungsteile angebracht sind.

Zum reversibel lösbaren Anschließen des zumindest einen Fluid-Kupplungsteils ist am Gehäuse vorzugsweise ein geeignet ausgestaltetes Anschlussteil ausgebildet, insbesondere als einstückiges, monolithisches Bestandteil des Gehäuses. Das Anschlussteil ist insbesondere in Form einer Buchse ausgebildet, in die das Fluid-Kupplungsteil einsteckbar ist. Alternativ ist das Anschlussteil beispielsweise nach Art einer Schraubverbindung oder auch eines Bajonettverschlusses ausgebildet.

Die hier beschriebene insbesondere hybride Kupplungsanordnung dient zum Durchführen einer Fluidleitung und vorzugsweise auch ergänzend von elektrischen Leitungen durch eine Trennwand, die zwei Teilräume voneinander trennt. Speziell wird durch die Trennwand ein Nassbereich eines Kraftfahrzeugs von einem Trockenbereich getrennt. Um eine zuverlässige Abdichtung zwischen diesen Teilräumen zu erreichen, weist der Schnittstellen-Träger bevorzugt eine Dichtung auf, die im montierten Zustand gegen die Trennwand gepresst ist. Die Trennwand weist einen Durchbruch auf, durch die die einzelnen Leitungen geführt sind und in die die Kupplungsanordnung zumindest in Teilen eingesteckt oder durchgesteckt ist. Die Dichtung umgibt den Durchbruch vorzugsweise vollständig umlaufend.

Bei dem Fluid handelt es sich insbesondere um eine Betriebsflüssigkeit oder eine Verbrauchsflüssigkeit für das Fahrzeug. Speziell handelt es sich um eine Reinigungsflüssigkeit und bei der Fluidleitung handelt es sich beispielsweise um eine Wischwasser-Leitung oder eine sonstige Leitung für Reinigungsflüssigkeit für eine Reinigungseinrichtung beispielsweise von Sensoren. Der Druck der Flüssigkeit wird insbesondere über eine geeignete Pumpe bereitgestellt, an der die Fluidleitung angeschlossen ist.

Die Kupplungsanordnung ist im endmontierten Zustand insbesondere in einem Fahrzeug verbaut, sodass also ein Fahrzeug mit einer derartigen Kupplungsvorrichtung ausgestattet ist. Bei dem Fahrzeug handelt es sich insbesondere um ein (nicht schienengebundenes) Straßenfahrzeug, speziell um ein Kraftfahrzeug und insbesondere um einen Personenkraftwagen.

Ausführungsbeispiele der Erfindung werden nachfolgend anhand der Figuren näher erläutert. Diese zeigen teilweise in vereinfachten Darstellungen:
- FIG 1: eine Kupplungsanordnung mit zwei Kupplungsteilen im nicht gekuppelten Zustand,
- FIG 2: eine Schnittdarstellung durch die Kupplungsanordnung gemäß FIG 1 in einem gekuppelten Zustand,
- FIG 3A: eine Schnittansicht einer Kupplungsanordnung gemäß einer zweiten Ausführungsvariante im nicht gekuppelten Zustand,
- FIG 3B: eine Schnittansicht der Kupplungsanordnung gemäß FIG 3A im gekuppelten Zustand,
- FIG 4: eine stark vereinfachte Schnittdarstellung durch zwei Membranen,
- FIG 5: eine Aufsicht auf eine Membrane,
- FIG 6: eine perspektivische Darstellung auf eine hybride Kupplungsanordnung,
- FIG 7: eine stark vereinfachte Querschnittsdarstellung mit einer hybriden Kupplungsanordnung und einem Schnittstellen-Träger welcher zwei Teilräume voneinander trennt,
- FIG 8A: eine perspektivische Darstellung einer hybriden Kupplungsanordnung mit einer Tülle als Schnittstellen-Träger,
- FIG 8B: eine perspektivische Darstellung der Kupplungsanordnung gemäß FIG 8A mit Blickrichtung von der gegenüberliegenden Seite,
- FIG 9: eine Kupplungsanordnung, bei dem an einem Schnittstellen-Träger ein Schutzschlauch angebracht ist
- FIG 10: eine Kupplungsanordnung als Teil eines Gehäuses einer elektrischen Baueinheit, die insbesondere als ein Steuergerät ausgebildet ist sowie
- FIG 11: eine an einer Trennwand angebrachte hybride Kupplungsanordnung gemäß einer weiteren Variante.

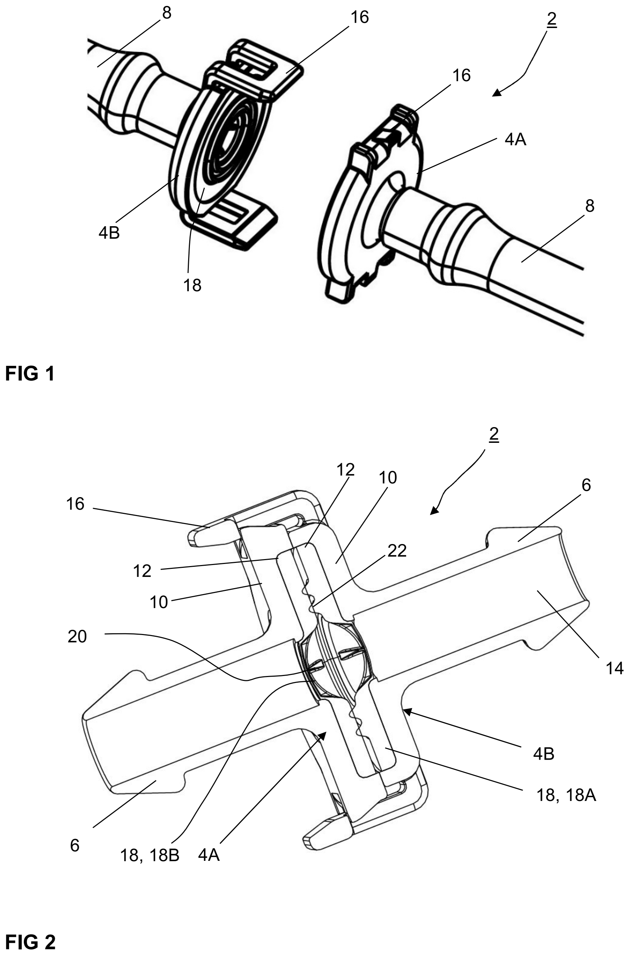

Eine Kupplungsanordnung 2 gemäß den Figuren 1 und 2 weist jeweils zwei Fluid-Kupplungsteile 4A,4B auf, an denen jeweils an einem Schlauchstutzen 6 ein Fluidschlauch 8 angeschlossen ist. Ein jeweiliger Schlauchstutzen 6 weist hierbei an seinem Ende außenseitig eine Verdickung auf, die sich konisch verjüngt. Über diese Verdickung ist im montierten Zustand (vergleiche hierzu FIG 1) der jeweilige Fluidschlauch 8 geschoben, welcher im Bereich der Verdickung eine Ausbeutung erfährt und dichtend anliegt. Bei Bedarf kann auch eine Schlauchschelle zur sicheren Befestigung des Fluidschlauchs 8 angebracht sein. Durch die beiden Fluidschläuche 8, die über die beiden Fluid-Kupplungsteile 4A, 4B miteinander verbunden sind, bilden zwei Abschnitte einer Fluidleitung, die über die Fluid-Kupplungsteile 4A, 4B reversibel trennbar sind und über die ein Fluid, insbesondere eine Flüssigkeit geführt wird. Die Fluidleitung ist für die Montage in einem hier nicht näher dargestellten Kraftfahrzeug ausgebildet und im montierten Zustand in einem solchen Kraftfahrzeug, insbesondere Pkw angebracht.

Wie insbesondere anhand der Querschnittsdarstellung gemäß FIG 2 zu erkennen ist, weist ein jeweiliges Fluid-Kupplungsteil 4A, 4B jeweils ein Gehäuseteil 10 auf, welches jeweils einen topfförmigen Aufnahmeabschnitt 12 aufweist, an den sich mittig jeweils der Schlauchstutzen 6 anschließt, welcher einen Fluidkanal 14 des jeweiligen Fluid-Kupplungsteils 4A, 4B bildet.

Die beiden Gehäuseteile 10 sind reversibel lösbar miteinander zu verbinden. Sie weisen hierzu jeweils zueinander komplementäre Verbindungsteile 16 auf, die im Ausführungsbeispiel nach Art von Rastelementen ausgebildet sind. Bei dem einem Gehäuseteil 10 ist beispielsweise eine in Axialrichtung abstehende Rastlasche ausgebildet, die im gekuppelten Zustand ein zugeordnetes Rastelement am anderen Gehäuseteil 10 formschlüssig umgreift.

Der jeweilige Aufnahmeabschnitt 12 weist jeweils einen sich insbesondere radial erstreckenden Bodenbereich auf, welcher insbesondere ringförmig ausgebildet ist. Dieser weist in seiner zentralen Mitte eine Öffnung auf, an der der Fluidkanal 14 in einen durch den Aufnahmeabschnitt 12 gebildeten Aufnahmeraum einmündet. Der topfförmigen Aufnahmeabschnitt 12 weist weiterhin einen umlaufenden axialen und insbesondere zylindrischen Wandbereich auf, welcher sich an den Bodenbereich anschließt. Im gekuppelten Zustand liegen die beiden Aufnahmeabschnitte 12, insbesondere deren axiale Wandbereiche aneinander an.

In dem jeweiligen Aufnahmeabschnitt 12 liegt jeweils eine Membran 18 ein. Diese weist jeweils einen umlaufenden, insbesondere ringförmigen Randbereich 18A sowie einen zentralen, mit zumindest einem Schlitz 20 versehenen Mittenbereich 18B auf.

Bei der Ausführungsvariante gemäß FIG 2 liegen die beiden Membranen 18 mit ihrem Randbereich 18A im gekuppelten Zustand unmittelbar aneinander an. Gleichzeitig werden sie auch gegen den Bodenbereich des jeweiligen Gehäuseteils 10 gepresst. Werden die Fluidleitung und damit die Fluidkanäle 14 von dem Fluid durchströmt, so erfolgt über die beiden Membrane 18 zugleich auch eine Abdichtung der Kupplung zur Umgebung hin.

In bevorzugter Ausgestaltung weist zumindest eine der Membranen 18 zumindest eine Dichtlippe 22 auf, welche in Axialrichtung hervorsteht und insbesondere vollständig umlaufend ausgebildet ist. Diese Dichtlippe 22 wird gegen den Randbereich 18A der anderen Membran 18 im gekuppelten Zustand gepresst.

Der geschlitzte Mittenbereich 18B weist vorzugsweise eine geringere Materialdicke als der Randbereich 18A auf. Der Mittenbereich 18B ist jeweils gewölbt ausgebildet, wobei im Ausführungsbeispiel der FIG 2 jeweils eine konkave Wölbung ausgebildet ist, sodass also die beiden Membranen 18 gegensinnig gewölbt sind.

Die Membranen 18 sind derart ausgebildet, dass sie einen jeweiligen Fluidkanal 14 eines jeweiligen Fluid-Kupplungsteils 4A, 4B dicht verschließen, sodass kein Fluid aus dem jeweiligen Fluidkanal 14 heraustreten kann, sofern kein Fluiddruck anliegt, der einen durch die Membranen 18 vorgegebenen Öffnungsdruck überschreitet.

Die Membranen 18 sind jeweils endseitig am Fluidkanal 14 angeordnet verschließen damit die Öffnung des Fluidkanals 8. Die Membranen 18 sind weiterhin derart ausgebildet, insbesondere der geschlitzte Mittenbereich 18B, dass ein Strömungsweg freigegeben wird, wenn der Fluiddruck den durch die Membran vorgegebenen Öffnungsdruck übersteigt.

Umgekehrt wird der Strömungsweg automatisch durch die jeweilige elastische Membran 18 wieder verschlossen, wenn der Fluiddruck unterhalb des Öffnungsdruckes gelangt. Durch die geschlitzte Membran ist daher der Strömungsweg insbesondere alleine aufgrund der Elastizität der Membran reversibel verschließbar und freigebbar. Dies erfolgt automatisch in Abhängigkeit des anliegenden Fluiddruckes.

Die beiden Membranen 18 der beiden Fluid-Kupplungsteile 4A, 4B sind vorzugsweise zueinander identisch ausgebildet.

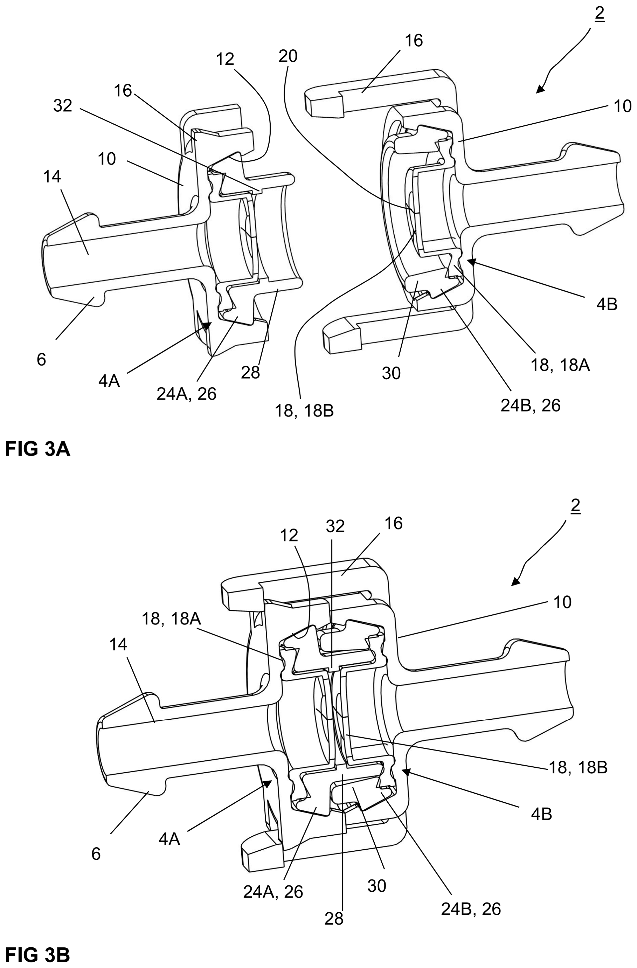

Bei der Ausführungsvariante gemäß den Figuren 3A, 3B weisen die beiden Fluid-Kupplungsteile 4A, 4B analog zu der Ausführungsvariante gemäß den Figuren 1,2 jeweils ein Gehäuseteil 10 mit Aufnahmeabschnitt 12 und daran angeschlossenen Schlauchstutzen 6 auf, wie sie zur vorhergehenden Ausführungsvariante bereits beschrieben wurden. Die beiden Gehäuseteile 10 sind wiederum über geeignete Verbindungsteile 16, die wiederum speziell als Rastelemente ausgebildet sind, miteinander verbindbar.

Bei der Ausführungsvariante gemäß den Figuren 3A, 3B weist die jeweilige Membran 18 anschließend an den umlaufenden Randbereich 18A einen sich axial erstreckenden, insbesondere zylindrische Wandbereich auf, der sich jeweils in Richtung zu dem gegenüberliegenden Fluid-Kupplungsteil 4A, 4B erstreckt. Am Ende dieses sich axial erstreckenden Wandbereichs ist der geschlitzte Mittenbereich 18B ausgebildet.

Die jeweilige Membran 18 wird bei dieser Ausführungsvariante mithilfe eines Membranhalters 24A, 24B gehalten. Membranhalter 24A, 24B weist eine ringförmige Basis 26 auf. Bei dem einen Membranhalter 24A schließt sich an diese ringförmige Basis 26 in axialer Richtung ein insbesondere zylindrischer Stutzen 28 an. Bei dem anderen Membranhalter 24B schließt sich in axialer Richtung ein insbesondere zylindrischer Aufnahmestutzen 30 an. Diese beiden Stutzen 28, 30 sind derart bemessen, dass der Stutzen 28 im gekuppelten Zustand in den Aufnahmestutzen 30 eingreift, wobei hier die Wandbereiche dichtend aneinander anliegen. Im gekuppelten Zustand bilden die beiden Stutzen 28, 30 daher einen mittleren Fluidkanal aus, welcher die beiden Fluidkanäle 14 der beiden Gehäuseteile 10 quasi miteinander verbindet. Durch die spezielle topfförmigen Ausgestaltung der beiden Membranen 18 dringen diese jeweils in diesen mittleren Fluidkanal ein und sind im gekuppelten Zustand unmittelbar einander gegenüberliegend angeordnet. D. h. zwischen den beiden Membranen 18 befindet sich kein weiteres Bauteil. Es ist lediglich ein Mindestabstand zwischen den beiden geschlitzte Mittenbereichen 18B gewährleistet, sodass deren Ventilfunktion gewährleistet ist. Die Membranen 18 können sich im geschlitzten Mittenbereich 18B auswölben, sodass die Schlitze 20 geöffnet werden.

Bei der Membran 18, welche in den Stutzen 28 eindringt, liegt der axiale Wandbereich der Membran 18 unmittelbar an einer Innenwandung des Stutzens 28 an. Demgegenüber weist der axiale Wandbereich der anderen Membran 18 einen radialen Abstand zu dem Aufnahmestutzen 30 auf.

Der Abstand zwischen den beiden geschlitzten Mittenbereichen 18B liegt dabei typischerweise lediglich im Bereich von wenigen Millimetern (beispielsweise 1 mm bis maximal 10 mm oder vorzugsweise bis maximal 5 mm).

Zur Gewährleistung dieses Abstands ist am Stutzen 28 an dessen Innenseite vorzugsweise ein Abstandselement 32 ausgebildet, welches im Ausführungsbeispiel vorzugsweise als ein umlaufender Ringsteg ausgebildet ist.

Wie weiterhin anhand der Figuren 3A, 3B zu erkennen ist, liegt der Randbereich 18A der jeweilige Membran 18 zwischen dem Bodenbereich des jeweiligen Gehäuseteils 10 und der ringförmigen Basis 26 ein.

Weiterhin ist zu erkennen, dass die ringförmige Basis außenseitig an dem axialen Wandbereich des Aufnahmeabschnitts 12 anliegt. Dieser ist in bevorzugter Ausgestaltung im Ausführungsbeispiel zumindest im Übergangsbereich zum Bodenbereich konische verjüngend ausgebildet. Korrespondierend hierzu ist ebenfalls eine Außenseite der ringförmigen Basis 26 konisch zulaufend ausgebildet.

Weiterhin ist allgemein zu erkennen, dass die ringförmige Basis 26 den Randbereich 18A jeweils formschlüssig umgreift. Insbesondere ist hierbei vorgesehen, dass sowohl ein in axialer Richtung wirkender Formschluss als auch ein in radialer Richtung wirkender Formschluss ausgebildet ist. Hierzu greift der Randbereich 18A in radialer Richtung beispielsweise schwalbenschwanzförmig in eine entsprechende Formgebung der ringförmigen Basis 26 ein.

Die beiden Membranen 18, insbesondere ihre geschlitzten Mittenbereiche 18B sind in bevorzugter Ausgestaltung gewölbt ausgebildet, und insbesondere nach Art einer Kugelkalotte. Zu der Ausgestaltung gemäß den Figuren 1 und 2 wurde eine Ausführungsvariante beschrieben, bei der die beiden geschlitzten Mittenbereich 18B gegensinnig gewölbt sind. Hierdurch ist zwischen den beiden geschlitzten Mittenbereich in 18B ein vergleichsweise großer Zwischenraum ausgebildet, in dem sich ein Restfluid ansammeln kann, welches beim Trennen der beiden Kupplungsteile auslaufen kann.

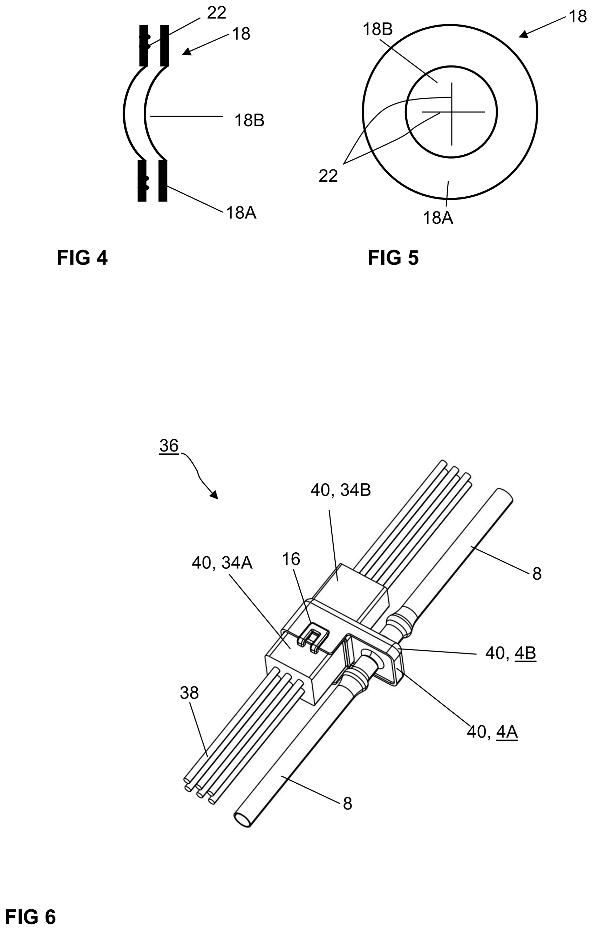

Um ein solches Restvolumen weiter zu verringern sind in bevorzugter Ausgestaltung die beiden geschlitzten Mittenbereich 18B gleichsinnig gewölbt, wie dies in FIG 4 dargestellt ist.

Anhand dieser FIG 4 ist weiterhin eine bevorzugte Variante dargestellt, bei der die Randbereiche 18A dicker ausgebildet sind als der geschlitzte Mittenbereich 18B. Speziell wird hierdurch vorzugsweise auch erreicht, dass im gekuppelten Zustand, wenn die Randbereiche 18A unmittelbar aneinander anliegen, noch ein gewisser Abstand zwischen den geschlitzten Mittenbereichen 18B ausgebildet ist.

Wie speziell anhand der FIG 5 zu erkennen ist, weist eine jeweilige Membran 18 zwei Schlitze 20 auf, die insbesondere senkrecht zueinander orientiert sind.

FIG 6 zeigt eine als hybride Kupplungsanordnung 36 ausgebildete Kupplungsanordnung. Diese weist neben den Fluid-Kupplungsteilen 4A, 4B ergänzend zwei elektrische Kupplungsteile 34A, 34B auf. Über die elektrischen Kupplungsteile 34A, 34B ist zumindest eine elektrische Leitung 38 reversibel trennbar. D. h. die beiden elektrischen Kupplungsteile 34A 34B bilden eine lösbare Trennstelle für die zumindest eine elektrische Leitung. Im Ausführungsbeispiel sind an einem jeweiligen elektrischen Kupplungsteil 34A 34B eine Vielzahl von elektrischen Leitungen 38 angeschlossen.

Die hybride Kupplungsanordnung 36 weist zumindest ein kombiniertes Kupplungsteil 40 auf und im Ausführungsbeispiel der FIG 6 zwei kombinierte Kupplungsteile 40. Ein jedes dieser kombinierten Kupplungsteile 40 bildet eine Art Gehäuse, oder Träger aus, an dem jeweils eines der Fluid-Kupplungsteile 4A, 4B sowie eines der elektrischen Kupplungsteile 34A 34B angeordnet sind. Die beiden kombinierten Kupplungsteile 40 können lösbar miteinander verbunden werden und sind im Ausführungsbeispiel der FIG 6 als Steckverbinder ausgebildet. Die beiden kombinierten Kupplungsteile 40 sind - ähnlich wie die Gehäuseteile 10 - reversibel lösbar aneinander befestigt, im Ausführungsbeispiel mittels als Rastelemente ausgebildete Verbindungsteile 16.

Die elektrischen Kupplungsteile 34A, 34B sind beispielsweise als herkömmliche Steckverbinder mit innenliegenden Kontaktstiften und Kontaktbuchsen ausgebildet.

Die Fluid-Kupplungsteile 4A, 4B sind vorzugsweise, jedoch nicht zwingend mit einer an einem jeweiligen Fluidkanal 14 angebrachten Membran 18 ausgebildet, wie sie beispielsweise zuvor beschrieben wurden. Die Fluid-Kupplungsteile 4A, 4B der hybriden Kupplungsanordnung 36 sind daher vorzugsweise so ausgebildet, wie sie zuvor für die beiden Ausführungsvarianten gemäß Figuren 1, 2 oder Figuren 3A, 3B beschrieben wurden.

Alternativ besteht jedoch auch die Möglichkeit, dass ein jeweiliger Fluidkanal eines jeweiligen Fluid-Kupplungsteils 4A, 4B durch eine anders ausgebildete Verschlussvorrichtung verschließbar ist. Grundsätzlich besteht auch die Möglichkeit, dass auf eine Verschlussvorrichtung gänzlich verzichtet wird.

Die hier beschriebene hybride Kupplungsanordnung 36, insbesondere mit dem kombinierten Kupplungsteil 40 zeichnet sich dadurch aus, dass in einfacher Weise eine gemeinsame Trennstelle und reversibel lösbare Verbindung sowohl für elektrische Leitungen 38 als auch für eine Fluidleitung geschaffen ist.

In der FIG 6 ist eine freie hybride Kupplungsanordnung 36 gezeigt, bei der also die hybride Kupplungsanordnung 36 nicht Bestandteil von weiteren Baueinheiten ist, sondern im montierten Zustand frei im Fahrzeug verlegt ist und allenfalls an Fixierpunkten fixiert ist, um beispielsweise einen Vibrationsschutz oder Klapperschutz zu gewährleisten.

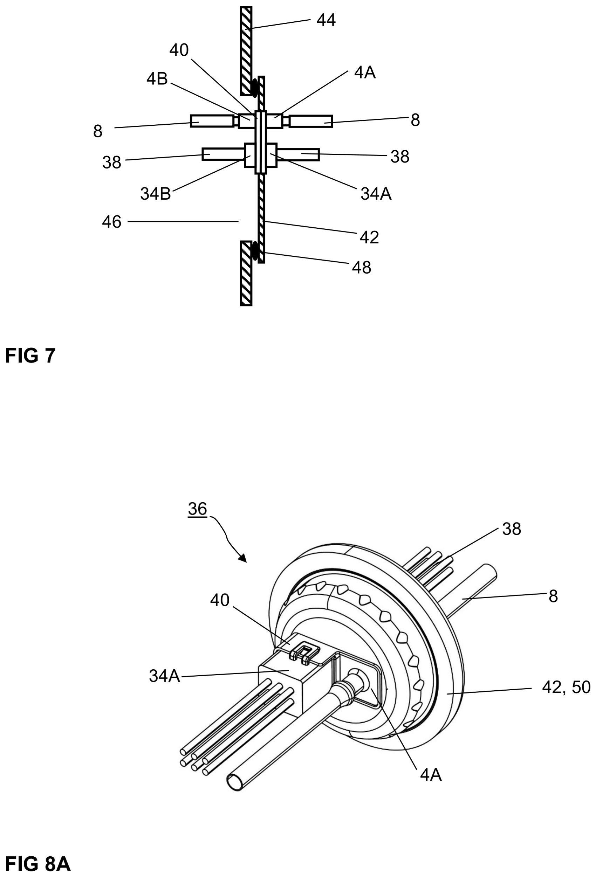

Die hybride Kupplungsanordnung 36, speziell das kombinierte Kupplungsteil 40 ist in einer bevorzugten Ausgestaltung an einem Schnittstellen-Träger 42 angebracht, wie dies im Zusammenhang mit den Figuren 7, 8A, 8B sowie 9 in verschiedenen Ausführungsvarianten näher erläutert wird.

Über den Schnittstellen-Träger 42 wird die Fluidleitung und im Falle der Verwendung einer hybriden Kupplungsanordnung 36 die zumindest eine Fluidleitung sowie die zumindest eine elektrische Leitung 38 von einem Teilraum in einen anderen Teilraum geführt, wobei die Teilräume durch eine Trennwand 44 voneinander getrennt sind.

Über den Schnittstellen-Träger 42 wird insbesondere eine abgedichtete Durchführung durch einen Wanddurchbruch 46 in der Trennwand 44 erreicht.

Im Ausführungsbeispiel der FIG 7 ist der Schnittstellen-Träger 42 plattenartig ausgebildet und dichtet über eine umlaufende Dichtung 48 den Wanddurchbruch 46 ab.

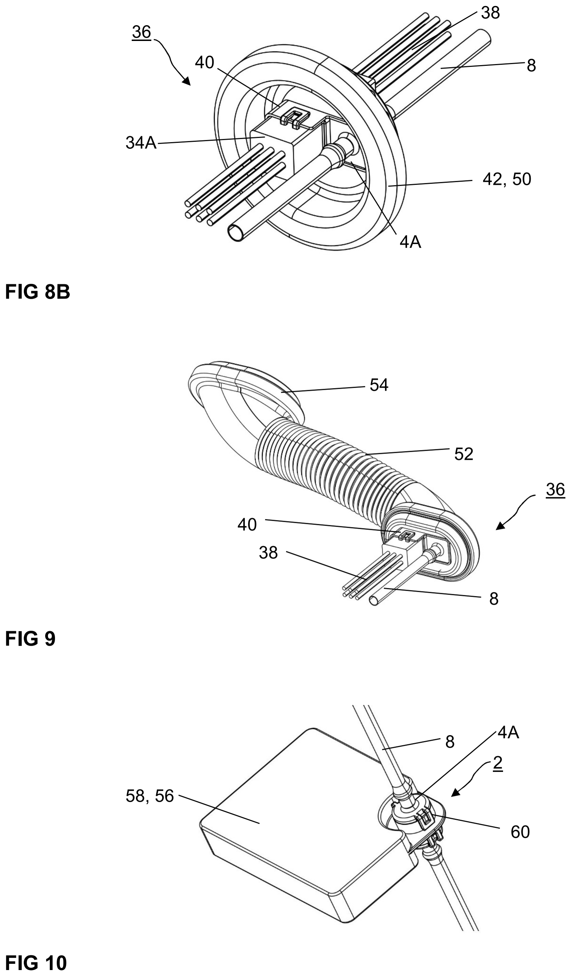

In den Schnittstellen-Träger 42 insbesondere gemäß der FIG 7 (in gleicher Weise ist dies auch auf die Schnittstellen-Träger 42 gemäß den Figuren 8A, 8B sowie FIG 9 übertragbar) ist beispielsweise die zuvor zu FIG 6 beschriebene hybride Kupplungsanordnung 36 eingesetzt. Das eine kombinierte Kupplungsteil 40 ist beispielsweise fest mit dem Schnittstellen-Träger 42 verbunden und das andere kombinierte Kupplungsteil 40 ist reversibel lösbar an diesem befestigt.

Alternativ hierzu können jedoch auch beide kombinierte Kupplungsteile 40 lösbar am Schnittstellen-Träger 42 befestigt sein. Hierzu weist dieser geeignet ausgestaltete Anschlussteile auf, die beispielsweise buchsenartig ausgebildet sind und in die ein jeweiliges kombiniertes Kupplungsteil 40 eingesteckt werden kann. Das Anschlussteil ist beispielsweise nach Art des zu der FIG 10 beschriebenen Anschlussteils 60 ausgebildet.

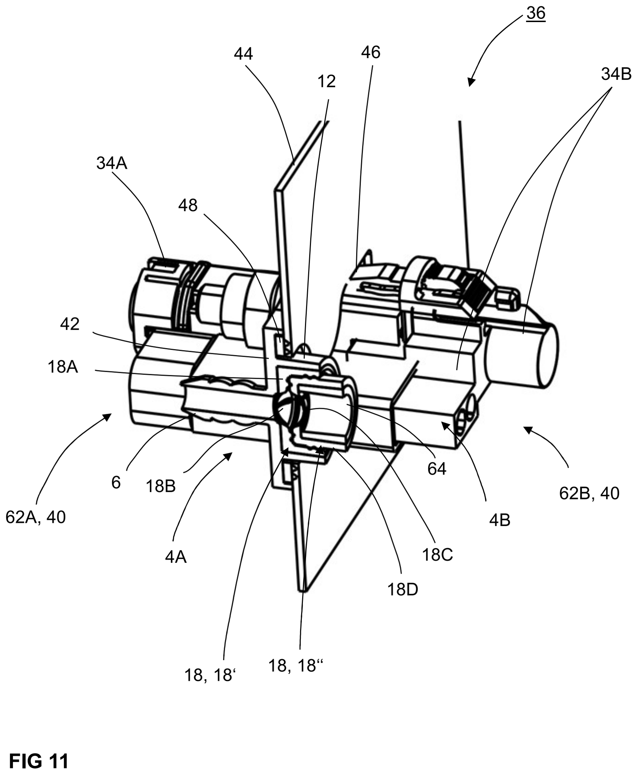

Gemäß einer weiteren Ausführungsvariante, wie sie beispielsweise in FIG 11 dargestellt ist, ist der Schnittstellen-Träger 42 Teil des einen kombinierten Kupplungsteils 40. Insbesondere bildet der Schnittstellen-Träger 42 und Gehäuseabschnitte des kombinierten Kupplungsteils 40 ein gemeinsames, monolithisches Gehäuseteil 62A, 62B, welches insbesondere als ein Spritzgussteil ausgebildet ist. Bei den Gehäuseabschnitten des kombinierten Kupplungsteils 40 handelt es sich um Gehäuseteile des einen Fluid-Kupplungsteils 4A, 4B und / oder Gehäuseteile des einen elektrischen Kupplungsteils 34A, 34B.

Alternativ zur Verwendung eines kombinierten Kupplungsteils 40 besteht auch die Möglichkeit, dass die unterschiedlichen Fluid-Kupplungsteile 4A, 4B und im Falle einer hybriden Kupplungsanordnung 36 auch die elektrischen Kupplungsteile 34A, 34B jeweils einzeln am Schnittstellen-Träger 42 befestigt sind, wobei zumindest eines der Kupplungsteile eines Kupplungsteile-Paars lösbar ist, um die gewünschte reversibel lösbare Kupplung zu erreichen. Ein jeweiliges Kupplungsteile-Paar wird entweder durch die beiden Fluid-Kupplungsteile 4A, 4B oder durch die beiden elektrischen Kupplungsteile 34A, 34B gebildet.

Auch bei dieser einzelnen Befestigung der verschiedenen Kupplungsteile 4A, 4B, 34A, 34B, weist der Schnittstellen-Träger 42 beispielsweise eine Vielzahl von Anschlussteilen auf, wie sie zuvor auch für das kombinierte Kupplungsteil 40 beschrieben wurde.

Bei der Ausführungsvariante gemäß den Figuren 8A, 8B ist der Schnittstellen-Träger 42 als eine Dichtungs-Tülle 50 ausgebildet, die im eingebauten Zustand in einen Wanddurchbruch 46 eingesetzt ist. Bei der Tülle 50 handelt es sich insbesondere um ein gespritztes oder gegossenes Bauteil aus einem Dichtmaterial, wobei in diesem Dichtmaterial die Kupplungsanordnung 2 als eine einfache Fluid-Kupplungsanordnung 2 oder auch als hybride Kupplungsanordnung 36 eingebettet ist. Speziell ist beispielsweise eines der Fluid-Kupplungsteile 4A, 4B oder eines der kombinierten Kupplungsteile 40 unmittelbar eingebettet und das andere ist daran reversibel lösbar befestigt. Alternativ hierzu besteht wiederum die Möglichkeit, dass von beiden Seiten die Kupplungsteile 4A, 4B sowie 34A, 34B reversibel anschließbar ist. Hierzu ist beispielsweise ein Trägerelement eingebettet, welches ein oder mehrere Anschlussteile für die reversible Verbindung mit den Kupplungsteilen 4A, 4B, 34A, 34B aufweist.

Der Schnittstellen-Träger 42 insbesondere gemäß der FIG 7 oder der FIG 8A, 8B wird bevorzugt zur Abtrennung eines Nassraums von einem Trockenraum eingesetzt. Insbesondere wird er in einer Trennwand (Firewall) zwischen einem Motorraum und der Fahrgastzelle des Fahrzeugs quasi als eine statische Kabeldurchführung eingesetzt. Neben der Fluidschnittstelle über die Fluid-Kupplungsteile 4A, 4B wird auch eine Daten- und / oder Stromschnittstelle über die elektrischen Kupplungsteile 34A, 34B bereitgestellt (gilt allgemein für die hybride Kupplungsanordnung 36). Bevorzugt ist an beiden Seiten des Schnittstellen-Trägers 42 eine Steckverbindung über die Kupplungsteile 4A, 4B, 34A, 34B ausgebildet.

FIG 9 zeigt eine spezielle Ausführungsvariante, wiederum mit einem als Tülle 50 ausgebildeten Schnittstellen-Träger 42. An diesen schließt sich ein Schutzschlauch 52 an, wobei in diesem - in hier nicht näher dargestellter Weise - die Fluidleitung sowie bei einer hybriden Kupplungsanordnung 36 ergänzend auch die zumindest eine elektrische Leitung 38 weitergeführt ist / sind. Der Schutzschlauch 52 ist insbesondere biegeflexibel ausgebildet und besteht insbesondere aus einem elastomeren oder thermoplastischen Material.

Der Schutzschlauch 42 bildet insbesondere ein einstückiges, monolithisches Bauteil zusammen mit der Tülle 50. Am gegenüberliegenden Ende des Schutzschlauches 52 ist insbesondere eine weitere Tülle 54 ausgebildet. Der Schutzschlauch 42 bildet insbesondere im montierten Zustand eine Verbindung zwischen zwei beweglichen Karosserieelementen eines Fahrzeuges aus, beispielsweise zwischen einer Fahrgastzelle und einer daran angeschlossenen Tür, beispielsweise eine Seitentür, eine Schiebetür, eine Heckklappe usw. Insgesamt ist hierdurch eine dynamische Kabeldurchführung erhalten.

FIG 10 zeigt eine Ausführungsvariante einer Kupplungsanordnung 2, bei denen die Fluid-Kupplungsteile 4A, 4B unmittelbar an einem Gehäuse 56 einer elektrischen Baueinheit 58, insbesondere einer Steuereinheit / eines Steuergeräts angeschlossen sind. Das Gehäuse 56 weist hierzu zumindest ein Anschlussteil und vorzugsweise zwei Anschlussteilen 60, an denen die Fluid-Kupplungsteile 4A, 4B insbesondere mit ihren Gehäuseteilen 10 anschließbar sind. Speziell sind die Anschlussteile 60 nach Art von Buchsen ausgebildet, in die die Gehäuseteile 10 eingesteckt werden. Die Verbindung erfolgt beispielsweise wiederum über geeignete Verbindungsteile 16, die speziell als Rastelemente ausgebildet sind. Alternativ hierzu können die Anschlussteile 60 auch als Schraubkupplungen oder als Bajonett-Kupplungen ausgebildet sein.

Das Gehäuse 56 umschließt einen inneren Bereich, in der Elektronikbauteile angeordnet sind. In hier nicht näher dargestellter Weise ist die elektrische Baueinheit 58 in geeigneter Weise mit elektrischen Anschlüssen versehen bzw. mit Leitungsdurchführungen, um die innenliegenden Komponenten zu versorgen.

Ein Teilbereich des Gehäuses 56, im Ausführungsbeispiel ein Eckbereich, ist geeignet ausgestaltet für die Anordnung und Verbindung mit den Fluid-Kupplungsteil 4A, 4B. Und zwar weist das Gehäuse 56 in diesem Teilbereich lediglich eine Gehäusewand auf, sodass also in diesem Bereich kein freier Innenraum vorliegt. Vielmehr weist das Gehäuse 56 in dieser Gehäusewand lediglich einen Durchbruch auf, durch den über die Kupplungsanordnung 2 bei Bedarf das Fluid durchströmen kann.

In einer alternativen Ausgestaltung ist eine hybride Kupplungsanordnung 36 angebracht, insbesondere sind zwei kombinierte Kupplungsteile 40 jeweils über Anschlussteile 60 anschließbar.

In bevorzugter Ausgestaltung bildet das Gehäuse 56 einen Schnittstellen-Träger 42, welcher also in einem Wanddurchbruch 46 einer Trennwand 44 angebracht ist, insbesondere zwischen dem Motorraum und der Fahrgastzelle (Firewall) und / oder zwischen einem Nassraum und einen Trockenraum. Das Gehäuse 56 ist hierbei beispielsweise anlog zu dem Schnittstellen-Träger 42 gemäß FIG 7 am Wanddurchbruch 46 angebracht.

FIG 11 zeigt in einer perspektivischen Schnittdarstellung eine an einer Trennwand 44 angebrachte hybride Kupplungsanordnung 36. Der Schnitt verläuft durch die Fluid-Kupplungsteile 4A, 4B, von denen lediglich das eine Fluid-Kupplungsteil 4A vollständig dargestellt ist.

Die Trennwand 44 weist den Wanddurchbruch 46 auf, durch den die hybride Kupplungsanordnung 36 zumindest mit einigen Bereichen eingeführt oder hindurchgeführt ist. Die hybride Kupplungsanordnung 36 weist den Schnittstellen-Träger 42 auf. Dieser trägt die bereits zu FIG 7 beschriebene Dichtung 48, die um den Wanddurchbruch 46 umlaufend angebracht ist und im montierten Zustand gegen eine Flachseite der Trennwand 44 gepresst ist.

Der Schnittstellen-Träger 42 ist vorzugsweise Teil eines monolithischen Gehäuseteils 62A, welches als weitere Bestandteile auch Gehäuseteile des einen Fluid-Kupplungsteils 4A und / oder des einen elektrischen Kupplungsteils 34A aufweist. So weist das monolithische Gehäuseteil 62A insbesondere einen topfförmigen Gehäusestutzen auf, welcher Teil des Fluid-Kupplungsteils 4A ist und den topfförmigen Aufnahmeabschnitt 12 bildet, an den sich ein Fluidstutzen, insbesondere ein Schlauchstutzen 6 anschließt.

Im Ausführungsbeispiel ist weiterhin auch ein Gehäuseteil des elektrischen Kupplungsteils 34A Bestandteil des monolithischen Gehäuseteils 62A.

Der Schnittstellen-Träger 42 ist bevorzugt eine Grundplatte, an der die verschiedenen weiteren Gehäuseteile ausgeformt sind.

Der Schnittstellen-Träger 42 trägt die Dichtung 48, welche den Wanddurchbruch 46 umgibt. Da im Ausführungsbeispiel der Gehäusestutzen, welcher den Aufnahmeteil 12 bildet, durch den Wanddurchbruch 46 hindurchgesteckt ist, umgibt die Dichtung 48 auch diesen Gehäusestutzen.

Im Ausführungsbeispiel weist die hybride Kupplungsanordnung 36 ein weiteres vorzugsweise monolithisches Gehäuseteil 62B auf, welches wiederum Gehäuseteile (nicht dargestellt) des jeweils anderen Fluid-Kupplungsteils 4B sowie Gehäuseteile des anderen elektrischen Kupplungsteils 34B aufweist.

Die beiden monolithischen Gehäuseteile 62A, B sind bevorzugt als Steck-Kupplungsteile ausgebildet, welche im gekuppelten Zustand ineinandergesteckt sind. Die beiden monolithischen Gehäuseteile 62A, B sind jeweils Teil des jeweiligen kombinierten Kupplungsteils 40 (vgl. zum kombinierten Kupplungsteil 40 auch Figuren 7 bis 10).

FIG 11 zeigt eine besonders bevorzugte Ausgestaltung der Membranen 18. Diese nachfolgend im Detail beschriebene Ausgestaltung ist unabhängig von der Ausbildung als hybride Kupplungsanordnung 36 und kann auch bei einfachen, auschließlichen Fluid-Kupplungsanordnungen eingesetzt werden.

Die beiden Membranen 18 sind jeweils topförmig ausgebildet und weisen einen Bodenabschnitt 18C sowie eine Axialabschnitt 18D auf. Der Bodenabschnitt 18C weist jeweils den zuvor beschriebenen Randbereich 18A sowie den geschlitzten Mittenbereich 18B auf.

Die eine Membran 18 bildet eine äußere Membran 18' und die andere Membran 18 bildet eine innere Membran 18" aus, die in die äußere Membran 18' eingesteckt ist. Die Axialabschnitte 18D der beiden Membranen 18', 18" sind dabei in die gleiche Richtung orientiert. Die Bodenabschnitte 18C liegen vorzugsweise unmittelbar aneinander an.

Die innere Membran 18" liegt im gekuppelten Zustand einerseits mit ihrem Bodenabschnitt 18C auf dem Bodenabschnitt 18C der äußeren Membran 18' auf, so dass die beiden Bodenabschnitte 18C axial abdichtend aneinander liegen. Hierzu weist zumindest eine der beiden Membranen 18', 18" eine bodenseitige, umlaufende Dichtlippe auf. Insbesondere liegen die beiden Membranen 18', 18" mit ihren Randbereichen 18A aneinander an. Die beiden geschlitzten Mittenbereiche 18B liegen einander gegenüber. Die Anordnung und Ausgestaltung der geschlitzten Mittenbereiche 18B kann unterschiedlich sein, wie sie z.B. zu den Figuren 2 bis 5 zuvor beschrieben wurde.

Bei der Ausgestaltung der FIG 11 sind die beiden geschlitzten Mittenbereiche 18B jeweils gewölbt, und zwar vorzugsweise gegensinnig gewölbt, so dass sie zwischen sich einen Abstand aufweisen und einen Zwischenraum zwischen sich einschließen. Alternativ sind sie gleichsinnig gewölbt und liegen im gekuppelten Zustand bevorzugt unmittelbar aneinander an.

Weiterhin liegt die innere Membran 18" mit ihrem Axialabschnitt 18D, welcher insbesondere durch einen zylindrischen Wandungsabschnitt gebildet ist, an dem Axialabschnitt 18C der äußeren Membran 18' dichtend an, so dass eine radiale Abdichtung zwischen den beiden Membranen 18' 18" ausgebildet ist. Bevorzugt weist zumindest einer der beiden Axialabschnitte 18D eine umlaufende Dichtlippe für die radiale Abdichtung auf.

Die äußere Membran 18' liegt passgenau in dem topfförmigen Aufnahmeabschnitt 12 ein. Dieser weist einen ringförmigen Bodenbereich auf, von dem der Schlauchstutzen 6 abgeht. Auf diesen ringförmigen Bodenbereich liegt die äußere Membran 18' mit ihrem Randbereich 18A dichtend auf. An einem zylindrischen Wandungsabschnitt des Aufnahmeabschnitts 12 liegt die äußere Membran 18' vorzugsweise mit ihrem Axialabschnitt 18D dichtend an. Der Schlauchstutzen 6 bildet den jeweiligen Fluidkanal 14, welcher durch die Membranen 18', 18", speziell durch die geschlitzten Mittenbereiche 18B verschlossen ist.

Im Inneren der inneren Membran 18" ist ein Rohrstück 64 aufgenommen, welches Teil des anderen Fluid-Kupplungsteils 4B ist und einen Abschnitt des Fluidkanals 14 bildet. Die innere Membran 18" ist über das Rohrstück 62 gestülpt und verschießt dessen Stirnseite. Der Axialabschnitt 18D liegt dichtend am Außenumfang des Rohrstücks 62 an. Das Rohrstück 62 ist eigensteif ausgebildet und besteht aus einem im Vergleich zur elastischen Membran 18" härteren Material. Speziell übt das Rohrstück 62 eine Stützfunktion aus. Insbesondere wird durch das Rohrstück 62 ein radialer Anpressdruck ausgeübt, so dass die radiale Dichtwirkung zwischen den Axialabschnitten 18D der beiden Membranen 18', 18" erreicht ist. Diese sind daher vorzugsweise zwischen der zylindrischen Gehäusewandung des Aufnahmeabschnitts 12 und dem Rohrstück 62 eingeklemmt.

Das zweite Fluid-Kupplungsteil 4B weist weitere Gehäuseteile auf, die hier nicht dargestellt sind. Insbesondere weist es - wie auch das Fluid-Kupplungsteil 4A - einen beispielsweise topfförmigen Aufnahmeabschnitt auf, in dem die innere Membran 18" einliegt und gehalten wird. Weiterhin weist es einen insbesondere als Schlauchstutzen 6 ausgebildeten Anschlussstutzen an. Das beschriebene Rohrstück 64 ist beispielsweise ein innenliegendes, monolithisches Teilstück dieses Anschlussstutzens oder schließt sich an diesen an

Durch diese spezielle Ausgestaltung mit den ineinander gesteckten Membranen 18', 18" ist insgesamt neben eine zuverlässige Abdichtung im Betrieb erreicht, wenn also der Fluidkanal 18 von einem unter Druck stehenden Fluid durchströmt wird und die geschlitzten Mittenbereiche 18A offen sind. Durch die Abdichtung der beiden Membranen 18', 18" zueinander und auch zu dem Aufnahmeabschnitt 12 und dem Rohrstück 64 ist eine zuverlässige Dichtwirkung bei geringem konstruktivem Aufwand erreicht.

### Bezugszeichenliste

- 2: Kupplungsanordnung
- 4A, 4B: Fluid-Kupplungsteil
- 6: Schlauchstutzen
- 8: Fluidschlauch
- 10: Gehäuseteil
- 12: Aufnahmeabschnitt
- 14: Fluidkanal
- 16: Verbindungsteil
- 18: Membran
- 18': äußere Membran
- 18": innere Membran
- 18A: Randbereich
- 18B: Mittenbereich
- 18C: Bodenabschnitt
- 18D: Axialabschnitt
- 20: Schlitz
- 22: Dichtlippe
- 24A, 24B: Membranhalter
- 26: ringförmige Basis
- 28: Stutzen
- 30: Aufnahmestutzen
- 32: Abstandselement
- 34A, 34B: elektrische Kupplungsteile
- 36: hybride Kupplungsanordnung
- 38: elektrische Leitung
- 40: kombiniertes Kupplungsteil
- 42: Schnittstellen-Träger
- 44: Trennwand
- 46: Wanddurchbruch
- 48: umlaufende Dichtung
- 50: Tülle
- 52: Schutzschlauch
- 54: weitere Tülle
- 56: Gehäuse
- 58: elektrische Baueinheit
- 60: Anschlussteil
- 62A, B: monolithisches Gehäuseteil
- 64: Rohrstück

## Patentansprüche

1. Kupplungsanordnung (2, 36) für eine Fluidverbindung in einem Fahrzeug insbesondere in einem Kraftfahrzeug mit zwei Fluid-Kupplungsteilen (4A, 4B) mit jeweils einem Fluidkanal (14) für ein Fluid, wobei in jedem Fluidkanal (14) eine geschlitzte Membran (18) angebracht ist, wobei eine jeweilige Membran (18) den jeweiligen Fluidkanal (14) in einem gekuppelten Zustand endseitig verschließt und einen Durchfluss des Fluids erst bei Überschreiten eines vorgegebenen Fluiddrucks ermöglicht.

2. Kupplungsanordnung (2, 36) nach dem vorhergehenden Anspruch, **dadurch gekennzeichnet, dass** die beiden Membranen (18) im gekuppelten Zustand einander gegenüberliegend angeordnet sind, ohne dass eine der Membranen (18) von einem Stutzen durchstoßen ist.

3. Kupplungsanordnung (2, 36) nach einem der vorhergehenden Ansprüche, wobei die beiden Membranen (18) im gekuppelten Zustand unmittelbar aneinander anliegen.

4. Kupplungsanordnung (2, 36) nach einem der vorhergehenden Ansprüche, wobei die beiden Membranen (18) jeweils einen umlaufenden Randbereich (18A) sowie einen geschlitzten Mittenbereich (18B) aufweisen, wobei die Mittenbereiche (18B) im gekuppelten Zustand vorzugsweise axial zueinander beabstandet sind.

5. Kupplungsanordnung (2, 36) nach einem der vorhergehenden Ansprüche, wobei die beiden Membranen (18) gleichsinnig gewölbt sind.

6. Kupplungsanordnung (2, 36) nach einem der vorhergehenden Ansprüche, wobei die beiden Fluid-Kupplungsteile (4A, 4B) jeweils ein Gehäuseteil (10) mit einem insbesondere topfförmigen Aufnahmeabschnitt (12) aufweisen und in dem Aufnahmeabschnitt (12) jeweils die Membran (18) einliegt, wobei sich an den Aufnahmeabschnitt (12) jeweils der Fluidkanal (14) anschließt.

7. Kupplungsanordnung (2, 36) nach einem der vorhergehenden Ansprüche, wobei jedes Fluid-Kupplungsteil (4A, 4B) einen Membranhalter (24A, 24B) aufweist, welcher in das jeweilige Gehäuseteil (10) eingesetzt ist und welcher die jeweilige Membran (18) im Gehäuseteil (10) hält, wobei die Membran (18) insbesondere zwischen einem Bodenbereich des Aufnahmeabschnitts (12) und dem Membranhalter (24A, 24B) einliegt.

8. Kupplungsanordnung (2, 36) nach dem vorhergehenden Anspruch, wobei die beiden Membranhalter (24A, 24B) als Dichtelemente ausgebildet sind und im gekuppelten Zustand gegeneinander gepresst sind, wobei der eine Membranhalter (24A, 24B) vorzugsweise einen Stutzen (28) und der andere Membranhalter (24A, 24B) einen Aufnahmestutzen (30) aufweist, in den der Stutzen (28) im gekuppelten Zustand eindringt.

9. Kupplungsanordnung (2, 36) nach einem der vorhergehenden Ansprüche, wobei die beiden Membranen (18) jeweils einen insbesondere zylindrischen Axialabschnitt (18D) aufweisen, wobei der Axialabschnitt (18D) im gekuppelten Zustand vorzugsweise dichtend an einem weiteren Bauteil anliegt.

10. Kupplungsanordnung (2, 36) nach dem vorhergehenden Anspruch, wobei die beiden Axialabschnitte (18D) im gekuppelten Zustand ineinandergesteckt sind und in radialer Richtung und / oder axialer Richtung dichtend aneinander anliegen.

11. Kupplungsanordnung (2, 36) für eine Fluidverbindung in einem Fahrzeug mit zwei Fluid-Kupplungsteilen (4A, 4B) mit jeweils einem Fluidkanal (14) für ein Fluid, insbesondere nach einem der vorhergehenden Ansprüche, die als eine hybride Kupplungsanordnung (36) ausgebildet ist und ergänzend auch für eine elektrische Verbindung ausgebildet ist und hierzu zwei elektrische Kupplungsteile (34A, 34B) aufweist, wobei die Kupplungsanordnung (2, 36) bevorzugt als eine Baueinheit ausgebildet ist, welche sowohl eines der Fluid-Kupplungsteile (4A, 4B) als auch eines der elektrischen Kupplungsteile (34A, 34B) aufweist.

12. Kupplungsanordnung (2, 36) für eine Fluidverbindung in einem Fahrzeug mit zwei Fluid-Kupplungsteilen (4A, 4B) mit jeweils einem Fluidkanal (14) für ein Fluid, insbesondere nach einem der vorhergehenden Ansprüche, wobei ein Schnittstellen-Träger (42) ausgebildet ist, welcher dazu ausgebildet ist, in einen Wanddurchbruch (46) eingesetzt zu werden, um zwei Teilräume voneinander insbesondere dichtend zu trennen, wobei im montierten Zustand auf dem Schnittstellen-Träger (42) zumindest die beiden Fluid-Kupplungsteile (4A, 4B) angebracht sind, um eine insbesondere abgedichtete Fluidverbindung zwischen den beiden Teilräumen zu ermöglichen, wobei am Schnittstellen-Träger (42) vorzugsweise auch die zwei elektrischen Kupplungsteile (34A, 34B) angebracht sind.

13. Kupplungsanordnung (2, 36) nach dem vorhergehenden Anspruch, wobei der Schnittstellen-Träger (42) plattenförmig mit zumindest einem Durchbruch ausgebildet ist, in die zumindest die Fluid-Kupplungsteile (4A, 4B) eingesetzt sind und / oder wobei der Schnittstellen-Träger (42) als eine Tülle (50) ausgebildet ist.

14. Kupplungsanordnung (2, 36) nach einem der Ansprüche 11 bis 13, wobei
a) sich an den Schnittstellen-Träger (42) ein Schutzschlauch (52) anschließt, in der ein mit dem Fluid-Kupplungsteil (4A, 4B) verbundener Fluidschlauch (8) sowie vorzugsweise auch zumindest eine elektrische Leitung (38) geführt sind, wobei es sich bei dem Schutzschlauch (52) insbesondere um einen Verbindungsschlauch zwischen zwei relativ zueinander beweglichen Karosserieteilen eines Fahrzeugtes handelt, und / oder
b) die Kupplungsanordnung (2, 36) Bestandteil einer elektrischen Baueinheit (58), insbesondere einer Steuereinheit ist, welche ein Gehäuse (56) aufweist, an welchem zumindest eines der Fluid-Kupplungsteile (4A, 4B) reversibel lösbar anschließbar ist, und / oder
c) der Schnittstellen-Träger (42) zum Abdichten eines Wanddurchbruches (46) eine umlaufende Dichtung (48) aufweist, welche im montierten Zustand gegen eine Trennwand gepresst ist.

15. Fahrzeug, insbesondere Kraftfahrzeug mit einer Kupplungsanordnung (2, 36) nach einem der vorhergehenden Ansprüche, wobei es sich bei der Kupplungsanordnung (2, 36) insbesondere um eine Kupplungsanordnung (2, 36) für eine Reinigungsflüssigkeit handelt.
